# EUROPEAN PATENT APPLICATION

(11) **EP 1 712 862 A2**
(43) Date of publication of application: **18.10.2006**
(21) Application number: 06075733.3
(22) Date of filing: 29.03.2006
(51) Int. Cl.: F28D 1/03, B21C 37/08, B21C 37/15, B23K 1/00

(54) **Fabricated, brazed metal heat exchanger tube manufacture**

(30) Priority: 13.04.2005 US 105142
(71) Applicant: Delphi Technologies, Inc., Troy, MI 48007 (US)
(72) Inventor: Kent, Scott E., Albion, NY 14411-9308 (US); Pyanowski, John R., Buffalo, NY 14219 (US); Hunt, Terry J., Williamsville, NY 14221 (US)
(74) Representative: Denton, Michael John

(57) **Abstract**

A fabricated, B type heat exchanger tube (14,14') is folded with a distinctive internal enclosed seam (O) of substantially triangular cross section, with an enlarged cross sectional area and longer, sharper corners (26,26'). The uniquely shaped internal seam (O) prevents liquid braze material from bridging and filling the cross sectional area of the seam, and thereby causes a lengthwise, erosive flow of braze material to move along the internal seam (O), rather than along the external seam (D).

## Description

### TECHNICAL FIELD

This invention relates to heat exchanger tubes in general, and specifically to a fabricated, folded tube of the multi chamber variety having improved manufacturability.

### BACKGROUND OF THE INVENTION

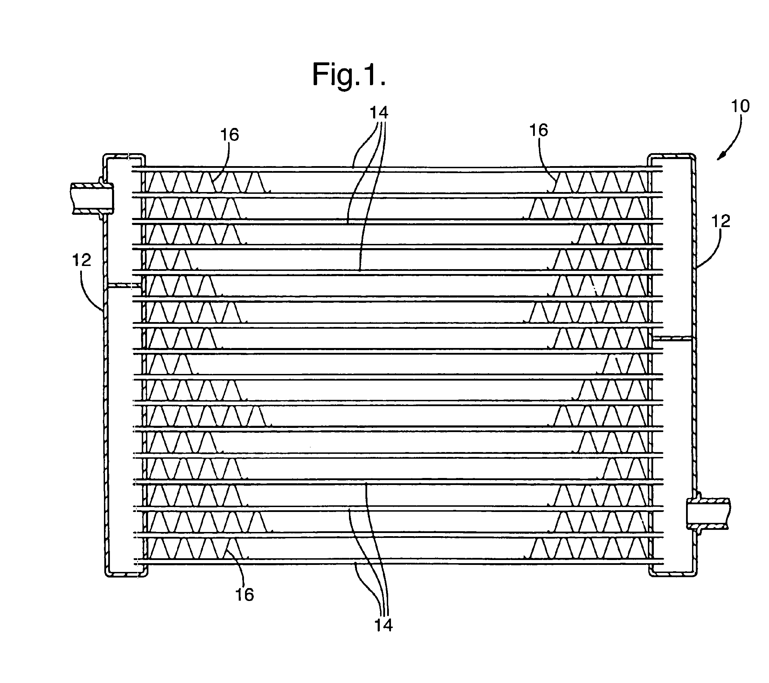

Heat exchangers used in air conditioning and heating systems, such as that shown generally at 10 in Figure 1, are often brazed together in one step to create an effectively integral unit. Typically, all components will be aluminum alloy, including the slotted header tanks 12, flow tubes 14, and corrugated air fins 16, some or all of which are coated on the outer surface with braze material that melts and flows under capillary action to form solid joints at the narrow interfaces of all the components. The tubes 14 may be integral, solid extrusions, which are difficult to coat with braze material, requiring that the fins 16 be so coated, as well as the slotted surface of the header tanks 12. As an alternative, the tubes 14 may be folded and fabricated of pre braze clad aluminum sheet stock. In that case, the tubes 14 will have at least one elongated braze seam therein, which can be brazed closed at the same time as the entire core is brazed. The tube seam may be formed down the side edge of the tube, when a single chamber tube of relatively narrow width is desired.

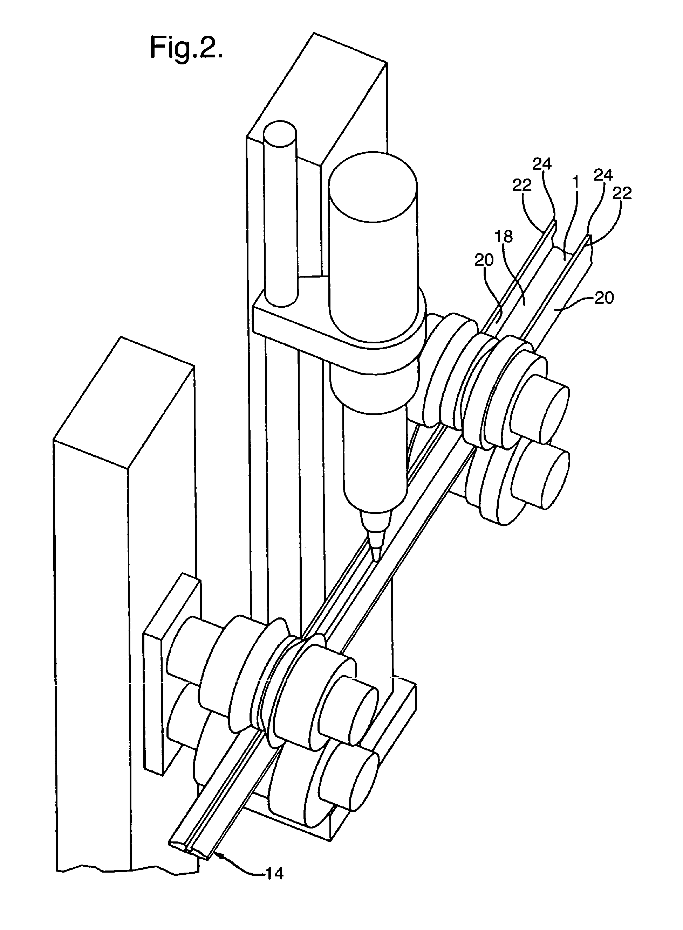

Referring to Figure 2, when a wider tube is used, it can be advantageous to fold the tube in a so called "B" shape with a central seam formed of two folded over and abutting center walls that protrude from one wall and abut the opposite tube wall to provide a central stiffening rib. Such a tube is shown in Figures 2, 3 and 4 (perspective view, cross section, and enlarged area of the cross section), and may also be seen in co assigned European patent application EP-1362649 and co assigned USPN 6615488. All such tubes have the same basic design, but there is some significant variation in details, as found in the published patent prior art. In general, any such tube 14 is integrally folded of braze clad aluminum stock, with a unitary bottom wall 18, and a pair of generally equal width top walls 20, which are integrally bent over at substantially 90 degrees across radiused external bent edges 22 to form a pair of generally abutting central walls 24. The abutted central walls 24 space the top walls 20 from the bottom wall 18 to defined two flow chambers, and provide stiffening. The terms "bottom" and "upper" are arbitrary, as the tube could be in any orientation. Likewise, the central walls 24 need not be exactly in the center of the width of the cross section, but typically will be. The engagement of central walls 24 with each other, and with the inside surface of bottom wall 18, can follow several known designs. Early disclosed designs, such as that in Japanese Utility Model Sho35-14334, terminated the central walls at a pair of integral, oppositely directed feet, either curved or flat, but with at least a substantially flat portion, the under surface of which rested on the inner surface of bottom wall 18. Later designs followed that same basic model, as shown in European Patent EP0302232B1. Other designs showed no turned out feet at the lower edges of the central walls 24, simply "sharp" edges, such as the square edges shown in USPN 6230533, or chamfered edges as shown in co assigned USPN 6615488. Still others extended the feet into integral, corrugated internal strengthening webs, such as the design shown in co assigned USPN 6513582, useful for high-pressure applications, such as condensers.

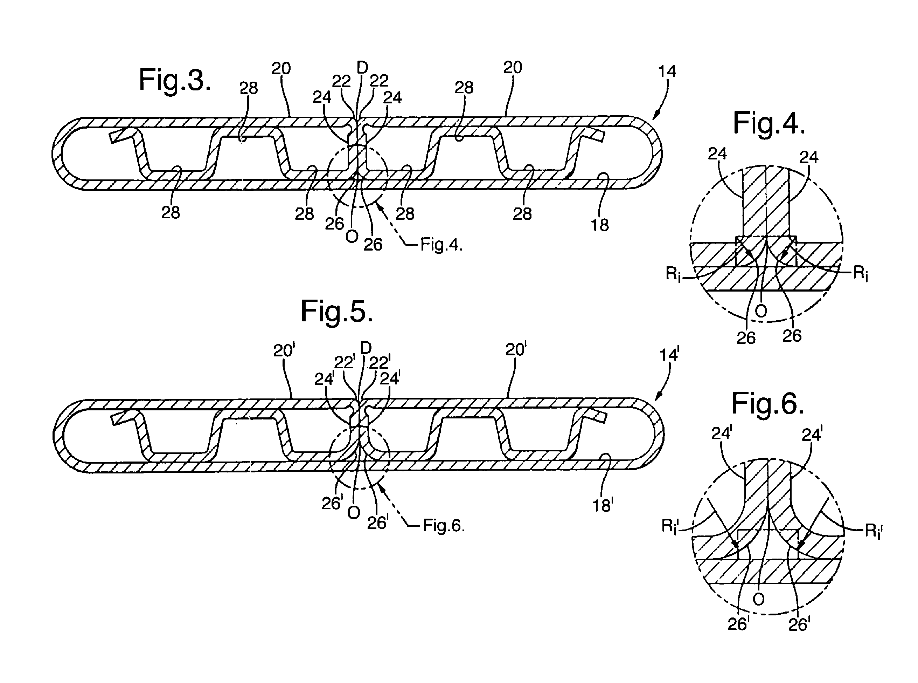

Referring to Figures 2 and 3, any B tube design will inevitably have two seams, an open external seam down the center, which may be referred to as the "delta" region D, and an internal seam O at the junction of the two central walls 24 with the bottom wall 18, which may be referred to as the "omega" region. The external seam is formed between the two adjacent external bent edges 22, and its width and depth will depend on how sharp those external bent edges 22 are. Ideally, the external seam must be as narrow and shallow as possible in order to create a good, leak proof joint where the end of the tube 14 enters the slotted header 12. Any leak at the external seam D anywhere along its length would also represent failure of the tube 14. Likewise, the enclosed internal seam O, formed between the two adjacent internal bent edges 26, will have a shape and size dependent on the shape and size of that portion of the central walls 24 that engages the inner surface of bottom wall 18, and can be expected to enclose much less space or volume when the central walls 24 are sharp (and have no internal bent edges 26), and relatively more when they are bent outwardly into divergent feet or corrugations, as shown. More detail on what the prior art teaches about the shape, size and construction of these two seams will be described below. In general, however, there is a clear teaching that it is necessary and desirable to fill both seams, all of the "daylight," in effect, solidly and fully with braze material, in order to create a strong joint. For example, EP0302232B1 referred to above shows a solid fill of braze material throughout both seams. USPN 6615488 also calls for a full braze fill of both seams. This recognition of the need for a solid, continuous fill throughout the seams appears to be essentially universal, regardless of the particular size, shape or construction of the seams, and is either explicitly stated, or shown in the drawings, when it is mentioned at all.

Turning to the details of the construction, shape and size of the various seams, the external or delta seam will be considered first. Again referring to Figures 2 and 3, the delta seam is formed between the two external bent edges 22. The width and depth of the delta seam is disclosed somewhat inconsistently in the prior art, when it is discussed at all. In some cases, it is shown as 90 degrees sharp, the ideal, but with no indication of how that bent edge sharpness would be achieved. In other cases, it is shown as being formed by two naturally bent edges, which would inherently take on a radius approximately equal to the stock thickness of the material from which the tube was folded. In co assigned USPN 6513582, referred to above, the external delta seam is shown in two different embodiments as being both an abutted pair of naturally curved quarter circles, and as a dead sharp 90 degree "line," with no indication of how the sharp exterior bent edges would be achieved. As a practical matter, with finite stock thickness to bend, as opposed to a perfect, zero thickness plane, the bent edges couldn't be truly sharp, but will have some radius. Two extreme limits of the external delta seam may be seen, one in USPN 6230533, which seeks to the exterior seam as a concavity, making it instead "convex," the result of abutting two protruding ridges. In fact, there is still a concavity between the protruding ridges, nor is this a commercially practical design. Such protrusions would be as deleterious to a good header to tube end joint as would a depression. The opposite extreme may be seen in USPN 6000461, in which it is proposed to carve out the material from either side of the abutting external bent edges 22 completely to the point where the crack is turned into a chasm, in effect. This is also commercially impractical, as it would dangerously thin out the tube walls in exactly the location that would cause a debilitating leak, especially at the header joint. The stated rationale for the external seam widening is significant, however, in that it responds to a different consideration. There, it is recognized that a differential heating action between the central and side (header tank) areas of the heat exchanger during the furnace brazing process can cause braze material to be wicked toward the hotter center of the tube and along the length of exterior seam, and thereby be pulled away from the tube end-header tank slot joint interfaces. The external joint is cut away to try to prevent the capillary action, but at the expense of creating a fundamentally impractical tube design, as noted. The subject invention recognizes a different effect of this lengthwise external seam capillary action, and deals with it in a very different fashion.

Those prior art references that speak to the details of the formation of the exterior or delta seam D recognize (with the noted exception above) that it needs to be minimized in depth and width, but recognize that there are practical limits to doing so. USPN 5890288, while it speaks in more detail to the internal omega seam, recognizes that there are practical limits to how sharply the exterior bent edges 22 can be naturally bent. The radii of the bent edges are said to range between about 0.15 to 0 .4mm, which is approximately equal to the range of typical tube stock thickness. EP-1362649, referred to above, discloses a method of thinning out the stock at the inner surface of the exterior bent edges, in order to achieve a tighter exterior radius, and consequent tighter delta seam. Again, regardless of the how the external seam is formed, the prior art generally recognizes that the seam needs to be filled with braze material for strength, needs to be minimized in size in order to be more easily filled, and is also capable of creating a toward the center capillary flow of braze material.

Referring again to Figure 4, the "natural" shape of the enclosed internal seam O is illustrated. By enclosed, it is meant that the internal seam does not open directly to the tube exterior, as does the open external seam, although it is open to the capillary flow of melted braze material. If the internal bent edges 26 are bent with the "natural" quarter circle radius (Ri) equal to approximately the metal stock thickness, then the omega seam will be approximately triangular, as shown, with a ninety degree peak corner at the "top" (which could be the bottom), and two forty five degree side corners. The triangular description is approximate, of course, since the sides are curved, rather than straight. The peak corner will sit above the inner surface of the bottom tube wall 18 by a distance about equal to the tube stock thickness, and the internal bent edges 26 will blend into the inner surface of bottom tube wall 18 relatively abruptly, at a point essentially coincident with a downward extension of the plane of the outer surface of the central wall 24, as shown by the dotted line. In fact, the triangular seam, in cross section, can be thought of as being inscribed in a "box" defined by the natural bend radius, as shown by the dotted lines in Figure 4, a box that is about as small in cross sectional area as can be naturally achieved, barring forming the internal bent edges 26 with a tighter corner, as the exterior edges 22 are.

Relatively fewer prior art references speak to the internal seam O formed between the abutting internal bent edges 26. Those that do invariably insist that it should be completely filled with braze material, whatever its size and shape. For example, USPN 5,890,288, noted above teaches a different construction than the typical, with line contact only between the abutting central walls 24. That portion of the central walls located below the line contact diverges in a shallow V to create an internal seam that is a relatively tall triangle with a narrow apex located just below the bottom of the delta seam, and straight (not radiused) sides extending down to rounded feet, which are bent with the typical radius that is approximately equal to the stock thickness. In effect, the peak of the V shape sits above the natural box defined above, but the two bottoms bent edges do not. This sacrifice of abutment area between the central walls would create a weak tube, and one very subject to corrosion or leaks through the line-contact-only abutment area of the central walls. The actual dimensions given show that the design is implemented in a tube with an extremely short internal flow passage height, probably one millimeter or less. As illustrated, the triangular cross section of the omega seam (numbered 56) appears to be approximately 1.4 mm tall at the inner peak (which has an included angle of approximately 10 degrees), 0.5 mm wide at the base, with outwardly curved "feet" of approximately 0.3 mm radius, substantially equal to the stock thickness of approximately 0.3 mm. In short, the omega seam disclosed is basically like that shown in Figure 4 above, but relatively taller, and no wider at the base. While the dimensions are not absolutely certain, what is certain is the teaching that the internal seam is to be completely and solidly filled with brazing material.

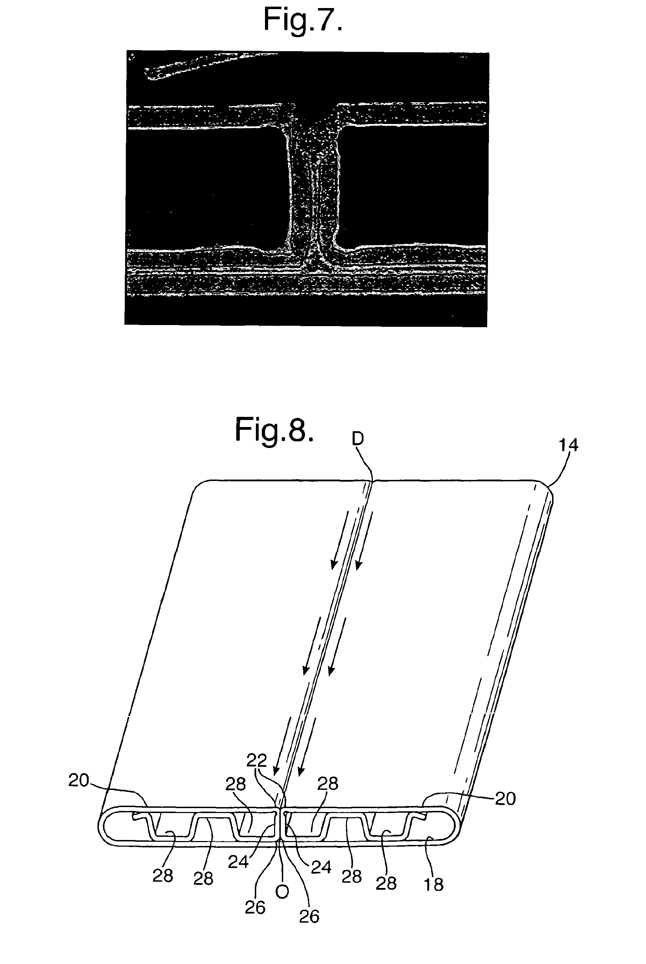

Referring next to Figure 7, a photo micrograph reveals the results of a relatively recent discovery of the previously unappreciated effect of the combination of tight, external delta seam in conjunction with the conventional size and shape internal omega seam, when coupled with the conventional teaching that both seams should be completely filled with braze material. The delta seam D is tight and shallow, as noted, enabled by the grooves on the inner surfaces of the exterior bent edges that allow a tighter radius bend. However, some braze material inevitably is pulled into the external seam, and the internal omega seam, as well as the very thin gap between the abutting central walls, is filled as well. Again, this solid fill, all the way from top to bottom, is considered necessary to a good, solid structure. However, this solid top to bottom (external seam to-internal seam) braze fill assures that a stream of braze material is runs lengthwise down the external delta seam, from each tube end toward the hotter core center, as illustrated in Figure 8. This stream is somewhat erosive to the base metal, creating a very evident wear, which is worse toward the center of the tube, and which is exacerbated by the internal shoulder thinning that enables the tight delta seam. As noted, USPN 6000461, while not recognizing the external seam erosion problem, does try to eliminate the capillary action by effectively eliminating the delta seam itself, but only at the cost of deliberating thinning out the tube walls at the critical juncture, which is undesirable.

### SUMMARY OF THE INVENTION

The subject invention conceives of a very different relationship of the external and internal seams, one which, by assuring that the internal seam is never fully filled or bridged by braze material, also, surprisingly, serves to create a very different flow of braze material in the delta seam, and with a very different, and more tolerable, erosion effect, the shape and size of the internal seam is modified to one in which all the corners of the triangular cross section lie outside the normal "box" created by the natural bend radius of the metal stock thickness, and in which all three bent corners comprise a very sharp and relatively long "wedge" of space converging out of the internal seam. As a consequence, melted braze material is pulled by capillary action into the three corners and out of the center of the internal seam, never filling it. As a further consequence, braze material entering the external delta seam from outside the tube is pulled down (inwardly) toward and into the peak corner of the omega seam, where it then runs lengthwise internally to the tube, rather than externally down the external seam. Any erosive effect is thus concentrated within the internal seam, working outwardly, rather than inwardly, between the abutting central walls. However, there is sufficient area of abutment between the central walls that the erosive effect cannot reach the external delta seam, or thereby cause an external leak.

### BRIEF DESCRIPTION OF THE DRAWINGS

Figure 1 is a plan view of a typical headered heat exchanger, such as a radiator or heater core;
Figure 2 is a perspective view of a B-tube type fabricated tube being formed;
Figure 3 is a cross section of a perspective of a prior art B tube design;
Figure 4 is an enlargement of the circled portion of Figure 3;
Figure 5 is a view similar to Figure 3, showing a preferred embodiment of a tube make according to the method of the invention;
Figure 6 is an enlargement of the circled portion of Figure 5;
Figure 7 is a photo micrograph of the result of brazing the tube cross section shown in Figure 3;
Figure 8 is a perspective view showing braze flow down the exterior seam of a tube of the general type shown in Figure 3;
Figure 9 is a photo micrograph of the result of brazing a tube made according to the invention;
Figure 10 is a perspective view showing brazes flow down into and inboard of, rather than along, the exterior seam of a tube made according to the invention;
Figure 11 is a schematic view showing the geometrical effect of enlarging the radius of the interior bent edges that form the internal seam.

### DESCRIPTION OF THE PREFERRED EMBODIMENT

Referring first to Figures 5 and 6, a preferred embodiment of a fabricated B tube 14' made according to the invention is illustrated, with like parts being given the same number primed. As illustrated, the stock metal thickness is approximately 0.26 mm, while the overall tube width is 18 mm, outer thickness or height approximately 2.02 mm, and internal passage height (from the inner surface of bottom wall 18 to the inner surface of top wall 20) of approximately 1.5 mm at the sides (and less, by an additional layer of stock thickness, within a corrugation 28). These same basic dimensions apply to the tube 14 in Figure 3, as well. The basic fabrication steps of tube 14' are familiar to those skilled in the tube fabricating art, and may be found in co assigned USPN 6615488, which is incorporated herein by reference. Briefly, any shape of the tube cross section, once conceived, can be produced by providing progressive form rollers of suitable shape. All features shown, all bend radii and shapes, are built into the progressive form rollers in a manner familiar to those skilled in the art. These rollers progressively bend the outermost edges of the metal stock first, outermost edges that could comprise, in the simplest cross section, just a sharp edge on the central walls 24', or divergent feet on the central walls 24' or, as here, the outermost of the corrugations 28'. Then, subsequent rollers form the "next in" features, including the remaining corrugations 28', the internal bent edges 26', the central walls 24', the external bent edges 22', and top walls 20'. Finally, the last of the progressive rollers fold the tops walls 20' down, thereby sandwiching the central walls 24' and corrugations 28' between the top walls 20' and the bottom wall 18, creating basic shape as shown in Figure 5. As desired, flux may be added to either or both surfaces of the metal stock at various points along the progressive tube shaping, so as to coat any surface that will be abutted with another. Only the outer surface is required to be braze clad when in a case where the only internal features of the tube are those directly integral to the bottom of the central walls 24', but when additional features like corrugations like 28' are added, braze material on both the inner and outer metal stock surface is needed. Once the basic tube shape is completed, they are cut to length, bundled with the other core components described above, and brazed at standard temperatures and cycle times. While the basic tube formation technique and braze process are known, what is novel as disclosed is the particular combination of structural features described in more detail below, which enables the improved performance of the otherwise standard braze process.

Referring particularly to Figures 6, in comparison to Figure 4, the difference in the internal omega seam O is illustrated in more detail. Again, in the standard design of Figure 4, with the radius Ri of the internal bent edges 26 substantially equal to the stock metal thickness, that omega seam lies substantially within the limited box indicated by the dotted lines. In the invention, however, the radius Ri' of the internal bent edges 26' is deliberately made larger than the metal stock thickness, in the range of just over one to three times the metal stock thickness, or, in the specific case here, in the range of approximately 0.35 mm to 0.85 mm. Approximately 0.6 mm is illustrated in the specific embodiment disclosed. This is done by configuring the rollers that make the internal bent edges 26' to create that radius, and requires no special tooling, as is required to create a smaller bend radius for the external bent edges 22'. This has several effects on the internal omega seam's size and shape. For one thing, it is larger in square area than in Figure 4, approximately 0.25 mm squared, as opposed to approximately 0.09 mm squared. As seen in Figure 6, all three corners of the enlarged, generally triangular shaped seam lie outside the smaller natural "box" of Figure 4, and the peak or top corner rests approximately 0.6 mm above the inner surface of the bottom wall 18', as opposed to a distance of only the metal stock thickness of approximately 0.26 mm. The side corners of the omega seam are also more widely spaced apart, by approximately 1.2 mm, as opposed to 0.6mm in the conventional design.

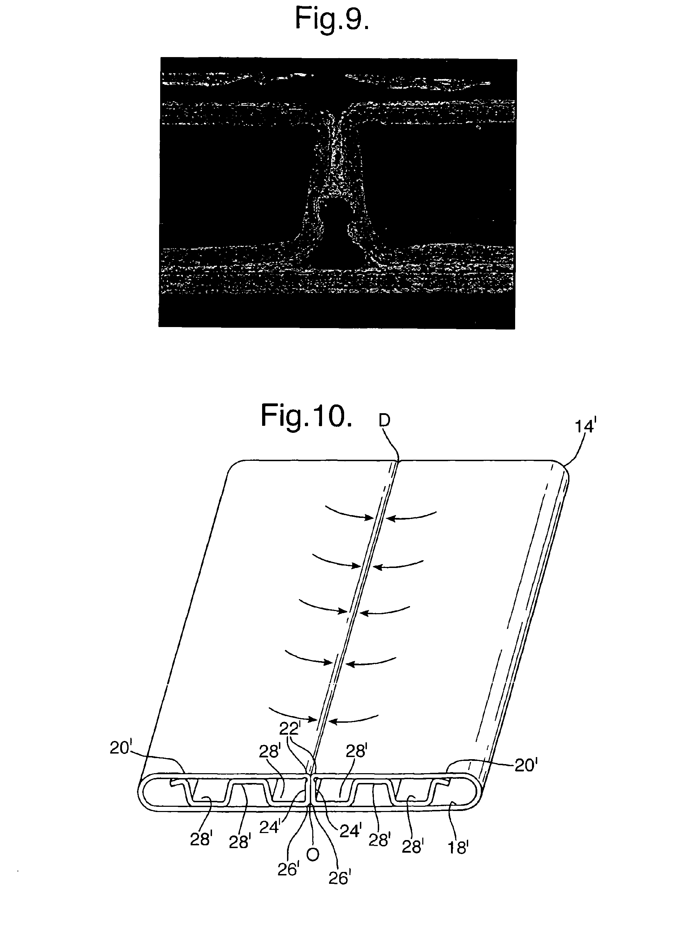

As best seen in Figure 9, the larger radius Ri' of the internal bent edges 26' has the effect of spreading the outer surface of each internal bent edge 26', and the innermost corrugation 28' to which it is integral, slightly up and away from the inner surface of the bottom wall 18', to create a long, thin and very acute wedge shape that converges out of (or diverges into) the central area of the internal seam. The same effect is evident between the outer surfaces of the larger radiused internal bent edges 26' where they blend into the abutting surfaces of the central walls 24'. This, as opposed to Figure 7, in which the abutting surfaces of the central walls 24 are substantially parallel, because the smaller, "natural" bend radius Ri serves to blend those surfaces into one sooner. It now becomes almost arbitrary to designate where the three corners of the seam cross section "end," that is, where the outer surface of each internal bent edge 26' finally merges into the inner surface of bottom wall 18' at the sides, or where the outer surface of the abutting internal bent edges 26' merge into the abutting surfaces of the central walls 24' at the peak. Despite the peak corner being spread out, there is still a good deal of abutting surface area between the central walls 24', as opposed to the line contact only disclosed in USPN 5890288 discussed above, and the angle of the peak corner is far more acute, a degree or two at most, as opposed to 10 degrees. This change in shape and size of the cross sectional shape of the internal omega seam lends itself to an improved performance during the braze process, as described next.

Referring next to Figures 9 and 10, during the normal braze process, melted braze material is inevitably drawn by capillary action into the external delta seam, either from the outer surface of tube 14', and/ or from and the outer surface of the header tanks 12 and/or the corrugated air fins 16, if they are also braze clad. Now, instead of running lengthwise and erosively down the outside of the external delta seam from each side toward the more quickly heated center, the melted braze material is continually pulled down into and through the external seam, all along its length, and into the internal seam, as shown in Figure 10. Once in the internal seam, instead of bridging and entirely filling the central area of the internal seam, liquid braze material is instead pulled continually out and into the very sharp, long wedge shape of the side and peak corners, which create a very strong capillary effect. The melted braze material that would otherwise have run erosively down the outside now runs internally instead, along the peak corner of the internal seam, eroding some base metal material out of the abutting side walls 24', and creating a distinctive, novel, "key hole" shape, as best seen in Figure 9. Even though the internal omega seam does not fill solidly with braze material, contrary to the conventional wisdom, there is more than enough solid braze joint between the abutting central walls 24', and between the innermost corrugations 28' and the bottom wall 18', to maintain the tube profile. While there is evident internal erosion from the inside outwardly, this is far more tolerable than outside in erosion at the delta seam. This is especially important when the external bent edges 22' are thinned out on the inner radius to create a tighter external seam, and are thereby more vulnerable to external erosion. The internal erosion enabled by the subject invention has essentially no chance to cause an external leak, as it would have to work its way out all the way through the entire area of abutment between the inner surfaces of the central walls 24', which would be very unlikely.

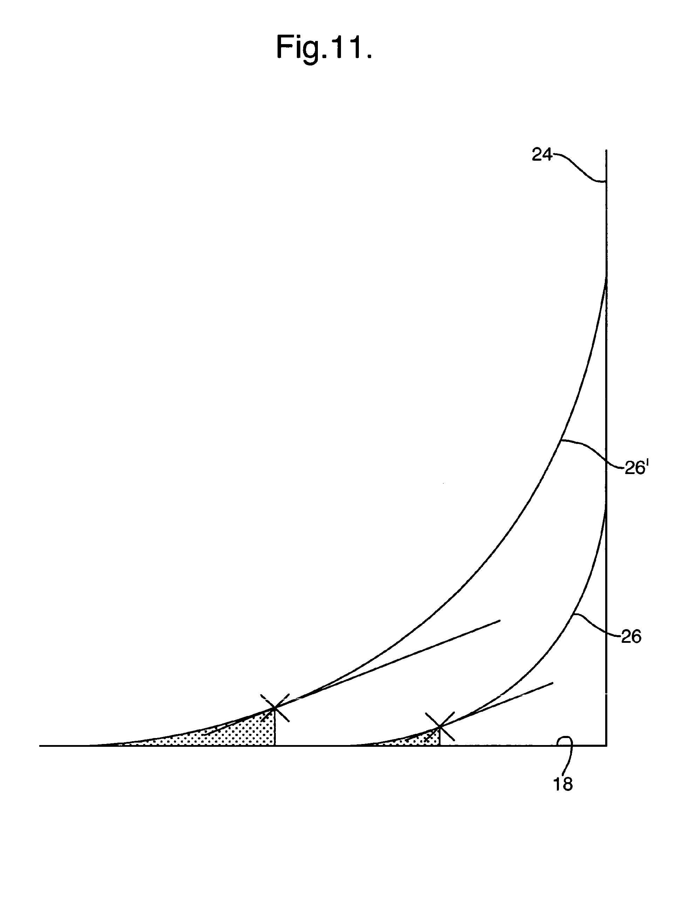

Referring next to Figure 11, the geometrical effect of the enlarged radius of the internal bent edges 26' is illustrated, as compared to a smaller, more conventional radius of a typical bent edges edge 26. Two effects are evident. The overall or center area of the generally triangular area is enlarged, and all the corners are father apart. In addition, those corners now have a larger area of wedge shaped "daylight" defined between the outer surface of the bent edges edge 26' and the inner surface of the bottom tube wall 18'. How effective capillary action will be in pulling melted braze material into the corners, and thereby preventing it from bridging across and filling the internal seam, should be a function both of volume (cross sectional area along the length) and degree of sharpness, and sharpness can be defined by the acuteness of the slope of a tangent line at any point along the outer surface of the internal bent edge 26 (26'), within the corners. Figure 11 shows that at a point with an arbitrary tangent line slope of approximately 20 degrees, there is a significantly longer length of wedge shaped area subtended by the larger radiused internal bent edges edge 26', as shown by the two stippled areas indicted. Therefore, not only will liquid braze material be pulled strongly into the corners, but there will be more area (volume) within the corners to hold it. So, this dual geometrical effect of the larger than conventional radius of the internal bent edges 26' contributes to preventing the liquid braze material from "bridging the gap" and creates the distinctive, hollow, and internally-only eroded internal seam, which is the hallmark of the invention. It is also thought that the continuous curvature of the outer surfaces of the internal bent edges 26', as opposed to a flattened surface, may help to keep braze material pulled "up" and into the peak corner, rather than flowing down and around into the side corners, where it might more readily bridge the gap and solidly fill the internal seam. Again, it is that solid fill that enables the erosive exterior flow of braze material in the exterior seam. Smaller or larger radii Ri' for the internal bent edges 26' could be operative, so long as they were larger that the stock thickness, and therefore large enough to create the enlarged internal or omega seam disclosed, with its distinctive, ultra acute corners. The "larger than normal" radius Ri' of the internal bent edges 26' need not be exactly semi circular, and could be conceptualized to include the ultimately large radius, that is, a flat surface, so long as the sufficiently acute and sharp, wedge shaped corners of the internal seam, and sufficiently large cross sectional area, were also created; sufficient to create the novel result of the brazing process described above. The "inner surface of the bottom wall 18" could also consist of an insert sandwiched between the bent edge 26 and the direct inner surface of bottom wall 18. Such an insert could form the flow channels, and would act in the same fashion to form the internal seam O.

## Claims

1. In a fabricated heat exchanger tube 14' of the type formed by folding and then brazing a blank of metal stock having a layer of braze material on at least its outer surface and having a pre determined stock thickness into a multi chambered cross sectional shape having a bottom wall 18' and a pair of top walls 20' spaced therefrom by a pair of abutted central walls 24' bent substantially perpendicularly out of the top walls 20' at adjacent external bent edges 22', thereby forming an open external seam D therebetween, said abutted central walls 24' being bent across radiused, adjacent internal bent edges 26' into oppositely directed, integral structural members 28' having substantially flat portions substantially perpendicular to said central walls 24', the under surfaces of which are abutted to the inner surface of said bottom wall 18' to form an enclosed, three cornered internal seam O between the outer surfaces of said internal bent edges 26' and said bottom wall 18' inner surface,
the improvement comprising forming said internal bent edges 26' with a radius Rᵢ' larger than said metal stock thickness, whereby said internal seam O is sufficiently large in cross sectional area and has corners that are sufficiently sharp such that melted braze material entering the internal seam O is pulled into the three corners and prevented from bridging and filling the internal seam O.

2. The improvement according to claim 1, in which said internal bent edges 26' are formed in a semi circular arc.

3. The improvement according to claim 1, in which said internal bent edges 26' are formed with a radius that is a in a range of more than one to three times said metal stock thickness.

4. The improvement according to claim 2, in which said internal bent edges 26' merge into additional integral structures, the outer surfaces of which are abutted to the inner surface of said bottom wall.
